# EUROPEAN PATENT SPECIFICATION

(11) **EP 3 271 198 B1**
(45) Date of publication and mention of the grant of the patent: **16.06.2021**
(21) Application number: 15742387.2
(22) Date of filing: 19.03.2015
(51) Int. Cl.: B60H 1/00, F25B 27/00, F25D 19/00

(54) **ALL ELECTRIC ARCHITECTURE TRUCK UNIT**
LASTWAGENEINHEIT MIT ELEKTRISCHER ARCHITEKTUR
UNITÉ DE CAMION À ARCHITECTURE TOUT ÉLECTRIQUE

(43) Date of publication of application: 24.01.2018
(73) Proprietor: Carrier Corporation, Farmington, CT 06034 (US)
(72) Inventor: MENARD, Cyril, F-76520 Franqueville Saint Pierre (FR); CRISTOFOLI, Harold Vincent, F-76520 Franqueville St Pierre (FR)
(74) Representative: Dehns
(86) International application number: PCT/IB2015/000540
(87) International publication number: WO 2016/147022

(56) References cited:
- EP-A1- 1 939 036
- WO-A1-2012/138497
- WO-A1-2013/142794
- US-A1- 2014 060 097

## Description

### BACKGROUND OF THE INVENTION

This invention relates generally to transport refrigeration systems and, more particularly, to supplying electrical power to all the power demand loads of the transport refrigeration unit while reducing engine fuel consumption.

Refrigerated trucks and trailers are commonly used to transport perishable cargo, such as, for example, produce, meat, poultry, fish, dairy products, cut flowers, and other fresh or frozen perishable products. A transport refrigeration system is mounted to the truck or to the trailer in operative association with a cargo space defined within the truck or trailer for maintaining a controlled temperature environment within the cargo space.

Conventionally, transport refrigeration systems used in connection with refrigerated trucks and refrigerated trailers include a transport refrigeration unit having a refrigerant compressor, a condenser with one or more associated condenser fans, an expansion device, and an evaporator with one or more associated evaporator fans, which are connected via appropriate refrigerant lines in a closed refrigerant flow circuit. Air or an air/gas mixture is drawn from the interior volume of the cargo space by means of the evaporator fan(s) associated with the evaporator, passed through the airside of the evaporator in heat exchange relationship with refrigerant whereby the refrigerant absorbs heat from the air, thereby cooling the air. The cooled air is then supplied back to the cargo space.

On commercially available transport refrigeration systems used in connection with refrigerated trucks and refrigerated trailers, the compressor, and typically other components of the transport refrigeration unit, must be powered during transit by a prime mover. In the case of refrigerated trailers, the prime mover typically comprises a diesel engine carried on and considered part of the transport refrigeration system. In mechanically driven transport refrigeration systems the compressor is driven by the diesel engine, either through a direct mechanical coupling or a belt drive, and other components, such as the condenser and evaporator fans are belt driven.

In conventional transport refrigeration system, the components of the refrigeration unit, such as the compressor for example, are mounted on a platform attached to the frame of the system by shock absorbers to limit the vibration transmitted to the components. The resulting system architecture is complex and includes a plurality of serviceable components that affect the reliability of the system.
EP 1 939 036 A1 discloses a refrigeration device for a trailer.

### BRIEF DESCRIPTION OF THE INVENTION

According to an embodiment of the invention, transport refrigeration system comprising a transport refrigeration unit, the a transport refrigeration unit configured to refrigerate a cargo space of a vehicle in which a perishable product is stored during transport the transport refrigeration unit comprising: a compressor having an electric compressor drive motor disposed therein for operating the compressor. A heat rejection heat exchanger and a heat absorption heat exchanger are fluidly coupled to the compressor. At least one fan assembly has at least one fan that is configured to provide an air flow over at least one of the heat rejection heat exchanger and the heat absorption heat exchanger. The transport refrigeration unit is configured to operate in a first mode, a second mode and a third mode. At least one onboard power source including a generator assembly coupled to a prime mover of the vehicle is configured to produce sufficient power to operate the compressor drive motor and the at least one fan in the first mode. An external power source is configured to produce sufficient power to operate the compressor drive motor and the at least one fan in the second mode. The transport refrigeration unit is configured to use power from an external power source and the prime mover is configured to operate the generator assembly to produce sufficient power to power an additional power connection to operate one or more systems of the vehicle external to the transport refrigeration unit in the third mode.

In addition to one or more of the features described above, or as an alternative, in further embodiments the prime mover is a diesel engine.

In addition to one or more of the features described above, or as an alternative, in further embodiments the generator assembly is directly coupled to the prime mover.

In addition to one or more of the features described above, or as an alternative, in further embodiments the generator assembly is indirectly coupled to the prime mover.

In addition to one or more of the features described above, or as an alternative, in further embodiments the generator assembly is indirectly coupled to the prime mover via at least one belt.

In addition to one or more of the features described above, or as an alternative, in further embodiments the generator assembly is indirectly coupled to the prime mover via a gearbox.

In addition to one or more of the features described above, or as an alternative, in further embodiments the generator assembly is configured to generate an alternating current.

In addition to one or more of the features described above, or as an alternative, in further embodiments an inverter operably is coupled to the generator assembly. The inverter is configured to convert the alternating current to a direct current.

In addition to one or more of the features described above, or as an alternative, in further embodiments a second onboard power source includes a battery system including one or more batteries.

In addition to one or more of the features described above, or as an alternative, in further embodiments when the transportation unit is operated in the second mode, the external power supply is configured to produce sufficient power to charge the battery system.

According to another embodiment of the invention, a method for operating a transport refrigeration system having a refrigeration unit configured to provide temperature conditioned air to a temperature controlled space, a prime mover, and an electricity generating device is provided including providing at least one onboard power source configured to provide sufficient power to operate the refrigeration unit. An external power source is determined to be operably coupled to the system. The system is operated in a first mode, a second mode or a third mode. The at least one onboard power source including an electricity generating device driven by a prime mover is configured to operate the refrigeration unit in the first mode. The external power source is configured to operate the refrigeration unit in the second mode. The transport refrigeration unit is configured to use power from the external power source and the prime mover is configured to operate the electricity generating device to power an additional power connection to power a system of the transport refrigeration system external to the transport refrigeration unit in the third mode.

In addition to one or more of the features described above, or as an alternative, in further embodiments at least one onboard power source includes a battery system including one or more batteries.

In addition to one or more of the features described above, or as an alternative, in further embodiments the external power source includes an external power grid coupled to an adapter of the transport refrigeration system.

In addition to one or more of the features described above, or as an alternative, in further embodiments the prime mover is a diesel engine and the electricity generating device is a generator.

These and other advantages and features will become more apparent from the following description taken in conjunction with the drawings.

### BRIEF DESCRIPTION OF THE DRAWINGS

The subject matter, which is regarded as the invention, is particularly pointed out and distinctly claimed in the claims at the conclusion of the specification. The foregoing and other features, and advantages of the invention are apparent from the following detailed description taken in conjunction with the accompanying drawings in which:
FIG. 1 is a perspective view of an example of a transport refrigeration system;
FIG. 2 is a schematic diagram of a transport refrigeration system according to an embodiment of the invention; and
FIG. 3 is a schematic diagram of a transport refrigeration system according to another embodiment of the invention.

The detailed description explains embodiments of the invention, together with advantages and features, by way of example with reference to the drawings.

### DETAILED DESCRIPTION OF THE INVENTION

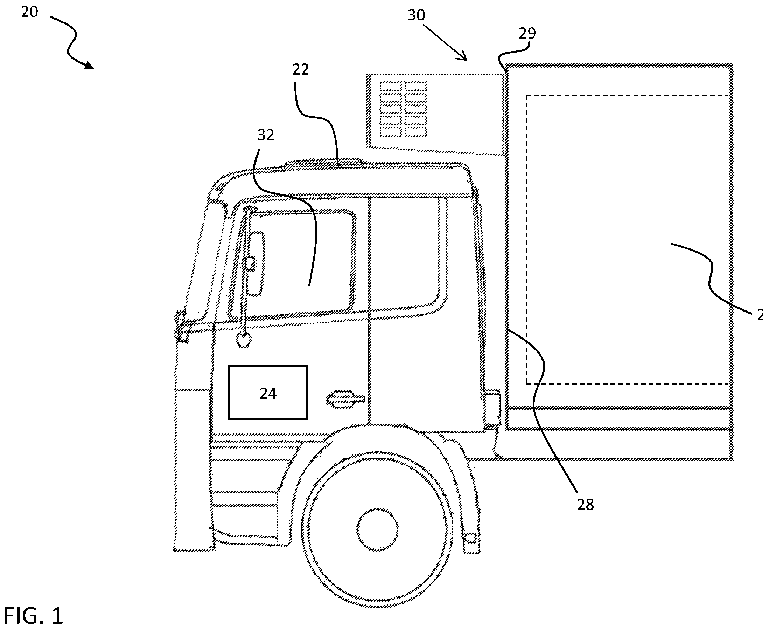

Referring now to the FIG. 1, an example of a transport refrigeration system 20 is illustrated. In the illustrated, non-limiting embodiment, the transport refrigeration system 20 includes a truck 22 having a prime mover or engine, illustrated schematically at 24, and a conditioned cargo space 26 defined by a plurality of insulated wall members, including a forward wall member 28. A transport refrigeration system 30 is configured to control the temperature within the conditioned cargo space 26. The transport refrigeration unit 30 generally includes a heat absorbing heat exchanger disposed within the conditioned space 26, a heat rejecting heat exchanger mounted on the vertical front outside surface 29 of the forward wall member 28, and a compressor driven by the truck engine 24. The truck 22 additionally includes a cabin 32 configured to house an operator of the truck 22.

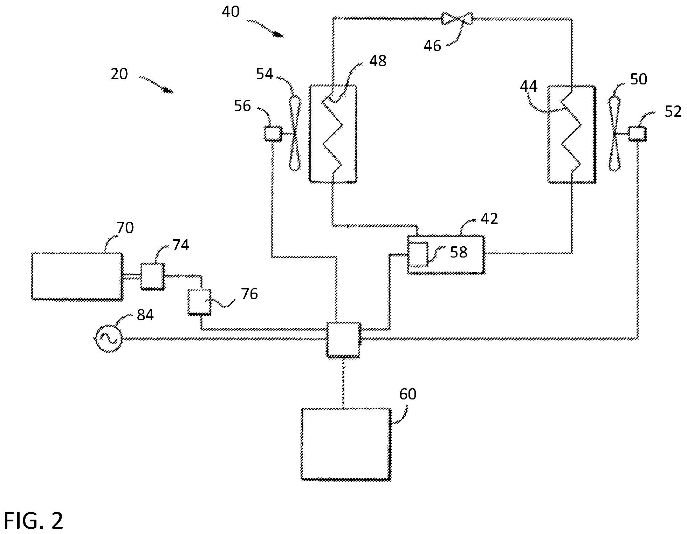

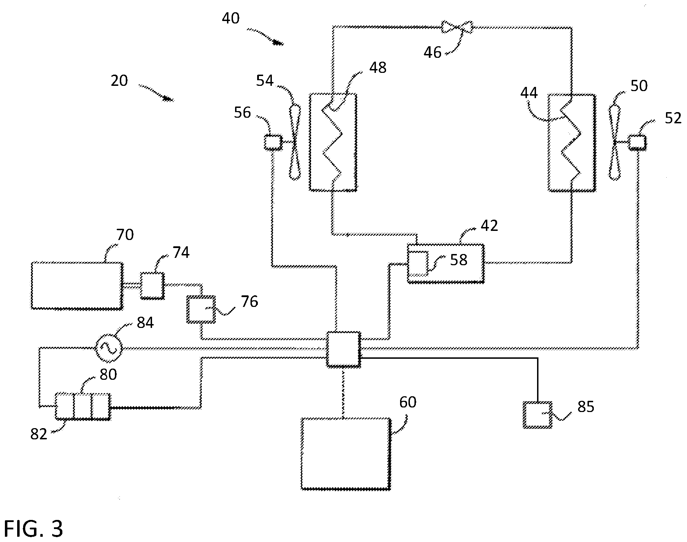

A schematic diagram of a transport refrigeration system 20 according to an embodiment of the invention is illustrated in more detail in FIGS. 2 and 3. ln addition, to the transport refrigeration unit 30, the transport refrigeration system 20 includes an electricity generating device 74, a prime mover or engine 70 for operating the refrigeration unit 30, and the electricity generating device 74. The refrigeration unit 30 functions, under the control of a controller 60, to establish and regulate a desired product storage temperature within the refrigerated cargo space wherein a perishable product is stored during transport and to maintain the product storage temperature within a specified temperature range. The refrigerated cargo space may be the cargo box of a trailer, a truck, a seaboard shipping container or an intermodal container wherein perishable cargo, such as, for example, produce, meat, poultry, fish, dairy products, cut flowers, and other fresh or frozen perishable products, is stowed for transport.

The transport refrigerant unit 30 includes a refrigerant compression device 42, a refrigerant heat rejection heat exchanger 44, an expansion device 46, and a refrigerant heat absorption heat exchanger 48 connected in refrigerant flow communication in a closed loop refrigerant circuit and arranged in a conventional refrigeration cycle. The refrigeration unit 30 also includes one or more fans 50 associated with the refrigerant heat rejection heat exchanger 44 and driven by fan motor(s) 52 and one or more fans 54 associated with the refrigerant heat absorption heat exchanger 48 and driven by fan motor(s) 56. It is to be understood that a basic refrigeration unit is illustrated and described herein and other components (not shown) may be incorporated into the refrigerant circuit as desired, including for example, but not limited to, a suction modulation valve, a receiver, a filter/dryer, an economizer circuit.

The refrigerant heat rejection heat exchanger 44 may, for example, comprise one or more refrigerant conveying coiled tubes or one or more tube banks formed of a plurality of refrigerant conveying tubes extending between respective inlet and outlet manifolds. The fan(s) 50 are operative to pass air, typically ambient air, across the tubes of the refrigerant heat rejection heat exchanger 44 to cool refrigerant vapor passing through the tubes. The refrigerant heat rejection heat exchanger 44 may operate either as a refrigerant condenser, such as if the refrigeration unit 30 is operating in a subcritical refrigerant cycle, or as a refrigerant gas cooler, such as if the refrigeration unit 30 is operating in a transcritical cycle.

The refrigerant heat absorption heat exchanger 48 may, for example, also comprise one or more refrigerant conveying coiled tubes or one or more tube banks formed of a plurality of refrigerant conveying tubes extending between respective inlet and outlet manifolds. The fan(s) 54 are operative to pass air drawn from the temperature controlled cargo box across the tubes of the refrigerant heat absorption heat exchanger 48 to heat and evaporate refrigerant liquid passing through the tubes and cool the air. The air cooled in traversing the refrigerant heat rejection heat exchanger 44 is supplied back to the temperature controlled cargo box. It is to be understood that the term "air" when used herein with reference to the atmosphere within the cargo box includes mixtures of air with other gases, such as for example, but not limited to, nitrogen or carbon dioxide, sometimes introduced into a refrigerated cargo box for transport of perishable produce.

The refrigerant compression device 42 may comprise a single-stage or multiple-stage compressor such as, for example, a semi-hermetic compressor. The compression device 42 has a compression mechanism (not shown) driven by an electric motor 58. In one embodiment, the motor 58 is disposed internally within the compressor with a drive shaft interconnected with a shaft of the compression mechanism, all sealed within a common housing of the compression device 42.

A controller 60 is configured to control operation of the refrigeration system 20 including, but not limited to, operation of various components of the refrigerant unit 30 to provide and maintain a desired thermal environment within the cargo box of a truck or trailer, such as trailer 22 for example, that is within the temperature controlled space in which a perishable product is stowed. The controller 60 may be an electronic controller including a microprocessor and an associated memory bank. The controller 60 controls operation of various components of the refrigerant unit 30, such as the refrigerant compression device 42 and its associated drive motor 58, as well as the fan motors 50, 54. The controller 60 may also be configured to selectively operate the prime mover 70, typically through an electronic engine controller (not shown) operatively associated with the prime mover 70.

The refrigeration unit 30 has a plurality power demand loads, including, but not limited to, the compression device drive motor 58, the drive motor 52 for the fan 50 associated with the refrigerant heat rejection heat exchanger 44, and the drive motor 56 for the fan 54 associated with the refrigerant heat absorption heat exchanger 48. The power load demands of the transport refrigeration unit 30 may be powered exclusively by electric power from one or more onboard power source. The electricity generating device 74 driven by the prime mover 70 is the primary onboard power source for operating the transport refrigeration system 20. In some embodiments, as shown in FIG. 3, the transport refrigeration system 20 may additionally include a secondary onboard power source comprising a high voltage battery system 80 having one or more batteries 82. The transport refrigeration system 20 additionally includes an adapter 84 configured to connect to an external electric power grid for supplying grid electric power to the transport refrigeration unit 30 during periods when the truck, trailer or container is parked, and the prime mover 70 is non-operational.

The prime mover 70, which typically comprises an on-board fossil-fuel engine, such as a diesel engine for example, drives the electricity generating device 74 that generates electrical power. In one embodiment, the electricity generating device 74 is directly coupled to the prime mover 70, such as the drive shaft of the engine for example. In other embodiments, the electricity generating device 74 is indirectly coupled to the prime mover 70, such as via one or more drive belts or a gearbox for example. The electricity generating device 74 may be an engine driven generator, configured to generate one of an alternating current (FIG. 2) and a direct current (FIG. 3). In embodiments where the electricity generating device is an AC generator, the system 20 further includes an inverter 76 configured to convert the alternating current to a direct current before being supplied to one or more of the power load demands of the transport refrigeration unit 30, such as the motors 52, 56 of fans 50, 54. Inclusion of an inverter 76 allows the power requirement of the one or more power load demands to be controlled, such that the compression device 42 and the fans 50, 54 may be operated at different speeds, thereby improving the overall efficiency of the system 20.

The transport refrigeration system 20 is configured to operate in two different modes of operation: a first mode, also referred to as "road mode" and a second mode, also referred to as "standby mode." The controller 60 is configured to control which power source is used to power the refrigeration unit 30 based on the selected mode of operation.

When the refrigeration system operates in the first "road mode", the controller 60 is configured to select at least one of the prime mover 70 coupled to the electricity generating device 74 and the battery system 80 to supply power to meet the plurality of power demand loads of the transport refrigeration unit 30. The adapter 84 is only used to power the refrigeration unit 30 when the truck or trailer is parked at a truck stop, warehouse, or other facility, and the refrigeration system is operated in a "standby mode." In such instances, the adapter 84 is connected to an external electrical power grid to supply grid power to the refrigeration unit 30, thereby permitting the controller 60 to shut down operation of the prime mover 70 and save fuel and any stored battery power. In addition, the power supplied from the electrical power grid may be used to recharge the battery system 80.

In some embodiments, additional systems that consume electrical power, such as a milk pump for example, are embedded into the transport refrigeration system 20. It is not always possible to connect these systems to the supply grid. Therefore, the refrigeration system 20 may additionally be configured to operate in a third mode where the electrical power grid is configured to supply power to the refrigeration unit 30, and the prime mover 70 is configured to operate the electricity generating device 74 to power an additional power connection 85 to energize these one or more external systems.

A transport refrigeration system 20 as described herein has various advantages. Fuel-savings are increased or maximized through a power management system that seamlessly transitions between available energy sources as required by the load. In addition, the overall system complexity is reduced and reliability is increased by eliminating serviceable mechanical components found in conventional systems, such as vibrasorbers for example.

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the scope of the invention. Additionally, while various embodiments of the invention have been described, it is to be understood that aspects of the invention may include only some of the described embodiments. Accordingly, the invention is not to be seen as limited by the foregoing description, but is only limited by the scope of the appended claims.

## Claims

1. A transport refrigeration system (20) comprising a transport refrigeration unit (30), the transport refrigeration unit (30) configured to refrigerate a cargo space (26) of a vehicle (22) in which a perishable product is stored during transport, the transport refrigeration unit (30) comprising:
a compressor (42) having an electric compressor drive motor disposed therein for operating the compressor;
a heat rejection heat exchanger (44) fluidly coupled to the compressor;
a heat absorption heat exchanger (48) fluidly coupled to the compressor; and
at least one fan (52) assembly having at least one fan (50) configured to provide an air flow over at least one of the heat rejection heat exchanger and the heat absorption heat exchanger, said transport refrigeration system (20) being **characterized in that** the unit is configured to operate in a first mode, a second mode, and a third mode, wherein at least one onboard power source (74) including a generator assembly coupled to a prime mover (70) of the vehicle is configured to produce sufficient power to operate the compressor drive motor and the at least one fan in the first mode, and an external power source is configured to produce sufficient power to operate the compressor drive motor and the at least one fan in the second mode, and the transport refrigeration unit is configured to use power from an external power source and the prime mover is configured to operate the generator assembly to produce sufficient power to power an additional power connection (85) to operate one or more systems of the vehicle external to the transport refrigeration unit in the third mode.

2. The transport refrigeration system according to claim 1, wherein the prime mover is a diesel engine.

3. The transport refrigeration system according to claim 1 or 2, wherein the generator assembly is directly coupled to the prime mover.

4. The transport refrigeration system according to claim 1 or 2, wherein the generator assembly is indirectly coupled to the prime mover.

5. The transport refrigeration system according to claim 4, wherein the generator assembly is indirectly coupled to the prime mover via at least one belt.

6. The transport refrigeration system according to claim 4, wherein the generator assembly is indirectly coupled to the prime mover via a gearbox.

7. The transport refrigeration system according to any one of claims 1 to 6, wherein the generator assembly is configured to generate an alternating current.

8. The transport refrigeration system according to any one of claims 1 to 7, further comprising an inverter operably coupled to the generator assembly, the inverter being configured to convert the alternating current to a direct current.

9. The transport refrigeration system according to any one of claims 1 to 8, wherein a second onboard power source includes a battery system including one or more batteries.

10. The transport refrigeration system according to claim 9, wherein when the transportation unit is operated in the second mode, the external power source is configured to produce sufficient power to charge the battery system.

11. A method for operating a transport refrigeration system having a transport refrigeration unit configured to provide temperature conditioned air to a temperature controlled space, a prime mover, and an electricity generating device, the method comprising:
providing at least one onboard power source configured to provide sufficient power to operate the refrigeration unit;
determining if an external power source is operably coupled to the system; and said method being **characterized by**
selectively operating the system in a first mode, a second mode, or a third mode, wherein the at least one onboard power source including an electricity generating device driven by a prime mover is configured to operate the transport refrigeration unit in the first mode, the external power source is configured to operate the transport refrigeration unit in the second mode, and the transport refrigeration unit is configured to use power from the external power source and the prime mover is configured to operate the electricity generating device to power an additional power connection to power a system of the transport refrigeration system external to the transport refrigeration unit in the third mode.

12. The method according to claim 11, wherein the at least one onboard power source includes a battery system including one or more batteries.

13. The method according to any one of claims 11 or 12, wherein the external power source includes an external power grid coupled to an adapter of the transport refrigeration system.

## Patentansprüche

1. Transportkühlsystem (20), das eine Transportkühleinheit (30) umfasst, wobei die Transportkühleinheit (30) so konfiguriert ist, dass sie einen Laderaum (26) eines Fahrzeugs (22) kühlt, in dem ein verderbliches Produkt während des Transports gelagert wird, wobei die Transportkühleinheit (30) umfasst:
einen Kompressor (42), der einen darin angeordneten elektrischen Kompressorantriebsmotor zum Betreiben des Kompressors aufweist;
einen mit dem Kompressor strömungsmäßig gekoppelten Wärmetauscher mit Rückkühlung (44);
einen Wärmeabsorptionswärmetauscher (48), der mit dem Kompressor strömungsmäßig verbunden ist; und
mindestens eine Gebläsebaugruppe (52), die mindestens ein Gebläse (50) aufweist, das so konfiguriert ist, dass es einen Luftstrom über mindestens einen von dem Wärmetauscher mit Rückkühlung und dem Wärmeabsorptionswärmetauscher bereitstellt, wobei das Transportkühlsystem (20) **dadurch gekennzeichnet ist, dass** die Einheit so konfiguriert ist, dass sie in einem ersten Modus, einem zweiten Modus und einem dritten Modus arbeitet,
wobei mindestens eine Energiequelle (74) im Fahrzeug, die eine mit einer Antriebsmaschine (70) des Fahrzeugs gekoppelte Generatorbaugruppe beinhaltet, so konfiguriert ist, dass sie ausreichend Energie erzeugt, um den Kompressorantriebsmotor und das mindestens eine Gebläse in dem ersten Modus zu betreiben, und eine externe Stromquelle so konfiguriert ist, dass sie ausreichend Strom erzeugt, um den Kompressorantriebsmotor und das mindestens eine Gebläse im zweiten Modus zu betreiben, und die Transportkühleinheit so konfiguriert ist, dass sie Strom von einer externen Stromquelle verwendet, und die Antriebsmaschine so konfiguriert ist, dass sie die Generatorbaugruppe zur Erzeugung von ausreichend Strom für einen zusätzlichen Stromanschluss (85) betreibt, um ein oder mehrere Systeme des Fahrzeugs außerhalb der Transportkühleinheit im dritten Modus zu betreiben.

2. Transportkühlsystem nach Anspruch 1, wobei die Antriebsmaschine ein Dieselmotor ist.

3. Transportkühlsystem nach Anspruch 1 oder 2, wobei die Generatorbaugruppe direkt mit der Antriebsmaschine gekoppelt ist.

4. Transportkühlsystem nach Anspruch 1 oder 2, wobei die Generatorbaugruppe indirekt mit der Antriebsmaschine gekoppelt ist.

5. Transportkühlsystem nach Anspruch 4, wobei die Generatorbaugruppe über mindestens einen Riemen indirekt mit der Antriebsmaschine gekoppelt ist.

6. Transportkühlsystem nach Anspruch 4, wobei die Generatorbaugruppe über ein Getriebe indirekt mit der Antriebsmaschine gekoppelt ist.

7. Transportkühlsystem nach einem der Ansprüche 1 bis 6, wobei die Generatorbaugruppe zur Erzeugung eines Wechselstroms konfiguriert ist.

8. Transportkühlsystem nach einem der Ansprüche 1 bis 7, weiterhin umfassend einen Wechselrichter, der betriebsmäßig mit der Generatornaugruppe gekoppelt ist, wobei der Wechselrichter so konfiguriert ist, dass er den Wechselstrom in einen Gleichstrom umwandelt.

9. Transportkühlsystem nach einem der Ansprüche 1 bis 8, wobei eine zweite Energiequelle im Fahrzeug ein Batteriesystem mit einer oder mehreren Batterien beinhaltet.

10. Transportkühlsystem nach Anspruch 9, wobei beim Betrieb der Transporteinheit im zweiten Modus die externe Energiequelle so konfiguriert ist, dass sie ausreichend Energie zum Laden des Batteriesystems erzeugt.

11. Verfahren zum Betrieb eines Transportkühlsystems, das eine Transportkühleinheit aufweist, die so konfiguriert ist, dass sie temperaturklimatisierte Luft an einen temperaturgeregelten Raum, an eine Antriebsmaschine und eine Stromerzeugungsvorrichtung liefert, wobei das Verfahren umfasst:
Bereitstellen mindestens einer Stromquelle im Fahrzeug, die so konfiguriert ist, dass sie ausreichend Strom für den Betrieb der Kühleinheit liefert;
Bestimmen, ob eine externe Stromquelle betriebsfähig mit dem System gekoppelt ist; und wobei das Verfahren **dadurch gekennzeichnet ist, dass**
das System selektiv in einem ersten Modus, einem zweiten Modus oder einem dritten Modus betrieben wird, wobei die mindestens eine Energiequelle im Fahrzeug, die eine von einer Antriebsmaschine angetriebene Stromerzeugungsvorrichtung beinhaltet, so konfiguriert ist, dass sie die Transportkühleinheit in dem ersten Modus betreibt,
die externe Energiequelle so konfiguriert ist, dass sie die Transportkühleinheit im zweiten Modus betreibt, und die Transportkühleinheit so konfiguriert ist, dass sie Energie von der externen Energiequelle verwendet, und die Antriebsmaschine so konfiguriert ist, dass sie die Stromerzeugungsvorrichtung betreibt, um einen zusätzlichen Stromanschluss zu betreiben, um ein System des Transportkühlsystems außerhalb der Transportkühleinheit im dritten Modus zu betreiben.

12. Verfahren nach Anspruch 11, wobei die mindestens eine Energiequelle im Fahrzeug ein Batteriesystem mit einer oder mehreren Batterien beinhaltet.

13. Verfahren nach einem der Ansprüche 11 oder 12, wobei die externe Stromquelle ein externes Stromnetz beinhaltet, das mit einem Adapter des Transportkühlsystems gekoppelt ist.

## Revendications

1. Système de réfrigération de transport (20) comprenant une unité de réfrigération de transport (30), l'unité de réfrigération de transport (30) conçue pour réfrigérer un espace de chargement (26) d'un véhicule (22) dans lequel un produit périssable est stocké durant un transport, l'unité de réfrigération de transport (30) comprenant :
un compresseur (42) présentant un moteur d'entraînement de compresseur électrique disposé en son sein pour faire fonctionner le compresseur ;
un échangeur de chaleur à rejet de chaleur (44) couplé de manière fluidique au compresseur ;
un échangeur de chaleur à absorption de chaleur (48) couplé de manière fluidique au compresseur ; et
au moins un ensemble à ventilateur (52) présentant au moins un ventilateur (50) conçu pour fournir un écoulement d'air au-dessus d'au moins un parmi l'échangeur de chaleur à rejet de chaleur et l'échangeur de chaleur à absorption de chaleur, ledit système de réfrigération de transport (20) étant **caractérisé en ce que** l'unité est conçue pour fonctionner dans un premier mode, un deuxième mode et un troisième mode,
dans lequel au moins une source d'alimentation embarquée (74) incluant un ensemble générateur couplé à un moteur principal (70) du véhicule est conçue pour produire suffisamment d'énergie pour faire fonctionner le moteur d'entraînement de compresseur et le au moins un ventilateur dans le premier mode, et une source d'alimentation externe est conçue pour produire suffisamment d'énergie pour faire fonctionner le moteur d'entraînement de compresseur et le au moins un ventilateur dans le deuxième mode, et l'unité de réfrigération de transport est conçue pour utiliser de la puissance provenant d'une source d'alimentation externe et le moteur principal est conçu pour faire fonctionner l'ensemble générateur pour produire suffisamment d'énergie pour alimenter une connexion d'alimentation supplémentaire (85) pour alimenter un ou plusieurs systèmes du véhicule externes à l'unité de réfrigération de transport dans le troisième mode.

2. Système de réfrigération de transport selon la revendication 1, dans lequel le moteur principal est un moteur diesel.

3. Système de réfrigération de transport selon la revendication 1 ou 2, dans lequel l'ensemble générateur est directement couplé au moteur principal.

4. Système de réfrigération de transport selon la revendication 1 ou 2, dans lequel l'ensemble générateur est couplé indirectement au moteur principal.

5. Système de réfrigération de transport selon la revendication 4, dans lequel l'ensemble générateur est couplé indirectement au moteur principal par l'intermédiaire d'au moins une courroie.

6. Système de réfrigération de transport selon la revendication 4, dans lequel l'ensemble générateur est couplé indirectement au moteur principal par l'intermédiaire d'une boîte d'engrenages.

7. Système de réfrigération de transport selon l'une quelconque des revendications 1 à 6, dans lequel l'ensemble générateur est conçu pour générer un courant alternatif.

8. Système de réfrigération de transport selon l'une quelconque des revendications 1 à 7, comprenant en outre un onduleur couplé de manière opérationnelle à l'ensemble générateur, l'onduleur étant conçu pour convertir le courant alternatif en un courant continu.

9. Système de réfrigération de transport selon l'une quelconque des revendications 1 à 8, dans lequel une seconde source d'alimentation embarquée inclut un système de batterie incluant une ou plusieurs batteries.

10. Système de réfrigération de transport selon la revendication 9, dans lequel lorsque l'unité de transport est actionnée dans le deuxième mode, la source d'alimentation externe est conçue pour produire suffisamment d'énergie pour charger le système de batterie.

11. Procédé pour faire fonctionner un système de réfrigération de transport présentant une unité de réfrigération de transport conçue pour fournir de l'air conditionné en température à un espace commandé en température, un moteur principal et un dispositif de génération d'électricité, le procédé comprenant les étapes consistant à :
fournir au moins une source d'alimentation embarquée conçue pour fournir suffisamment d'énergie pour faire fonctionner l'unité de réfrigération ;
déterminer si une source d'alimentation externe est couplée de manière opérationnelle au système ; et ledit procédé étant **caractérisé par** l'étape consistant à
faire fonctionner sélectivement le système dans un premier mode, un deuxième mode ou un troisième mode, dans lequel la au moins une source d'alimentation embarquée incluant un dispositif de génération d'électricité entraîné par un moteur principal est conçue pour faire fonctionner l'unité de réfrigération de transport dans le premier mode, la source d'alimentation externe est conçue pour faire fonctionner l'unité de réfrigération de transport dans le deuxième mode, et l'unité de réfrigération de transport est conçue pour utiliser l'énergie provenant de la source d'alimentation externe et le moteur principal est conçu pour faire fonctionner le dispositif de génération d'électricité pour alimenter une connexion électrique supplémentaire pour alimenter un système du système de réfrigération de transport externe à l'unité de réfrigération de transport dans le troisième mode.

12. Procédé selon la revendication 11, dans lequel la au moins une source d'alimentation embarquée inclut un système de batterie incluant une ou plusieurs batteries.

13. Procédé selon l'une quelconque des revendications 11 ou 12, dans lequel la source d'alimentation externe inclut un réseau d'alimentation externe couplé à un adaptateur du système de réfrigération de transport.
